# EUROPEAN PATENT APPLICATION

(11) **EP 4 672 156 A1**
(43) Date of publication of application: **31.12.2025**
(21) Application number: 24759539.0
(22) Date of filing: 05.02.2024
(51) Int. Cl.: G06T 15/02

(54) **VIRTUAL OBJECT MOUNTING METHOD AND APPARATUS, DEVICE, AND MEDIUM**

(30) Priority: 24.02.2023 CN 202310179314
(71) Applicant: Beijing Zitiao Network Technology Co., Ltd., Beijing 100190 (CN)
(72) Inventor: XU, Zhihao, Beijing 100028 (CN)
(74) Representative: Marks & Clerk LLP
(86) International application number: PCT/CN2024/075971
(87) International publication number: WO 2024/174862

(57) **Abstract**

The disclosure discloses a virtual object mounting method and apparatus, a device, and a medium. In order to implement mounting of a virtual object, an original video is obtained, and a virtual object to be mounted is obtained based on a selection of a user. The virtual object selected by the user is mounted to a target part of a target object in the original video. Meanwhile, an occluded area of the virtual object is removed, and the video with the occluded area removed is rendered, to obtain a target video. That is, a part, occluded by the target object, of the virtual object is removed, so that the virtual object can conform to the target part. That is, with the technical solution provided by the disclosure, when the virtual object is mounted to the target part of the target object in the original video, the occluded area of the virtual object can be removed in a timely manner, allowing the virtual object to better conform to the target part, thereby improving the mounting effect.

## Description

The present application claims a priority to the Chinese Patent Application No. 202310179314.1, filed with the China National Intellectual Property Administration on February 24, 2023 and entitled "VIRTUAL OBJECT MOUNTING METHOD AND APPARATUS, DEVICE, AND MEDIUM", which is incorporated herein by reference in its entirety.

### FIELD

The disclosure relates to the field of computer technologies, and in particular to a virtual object mounting method and apparatus, a device, and a medium.

### BACKGROUND

High-quality rendering engines can provide a true and stable visual experience for image processing. However, effects of existing mounting props are not satisfactory. For example, mounting effects of neck-mounted props are relatively stiff, and a mounted virtual object may fail to conform to the neck, and fail to achieve a better adaptability effect based on motion of a user's head.

### SUMMARY

In view of this, embodiments of the disclosure provide a method and apparatus for mounting a virtual object, a device, and a medium, so that a virtual object can better conform to a mounting part, thereby improving the sense of realism.

In order to achieve the above objective, the disclosure provides the following technical solutions.

In a first aspect of the disclosure, there is provided a virtual object mounting method, including:
obtaining an original video;
obtaining a virtual object based on a selection of a user;
mounting the virtual object to a target part of a target object in the original video;
removing an occluded area of the virtual object; and
rendering the video with the occluded area removed, to obtain a target video.

In a first aspect of the disclosure, there is provided a apparatus for mounting a virtual object, including:
an obtaining unit configured to obtain an original video, where
the obtaining unit is further configured to obtain a virtual object based on a selection of a user;
a processing unit configured to mount the virtual object to a target part of a target object in the original video, where
the processing unit is further configured to remove an occluded area of the virtual object; and
a rendering unit configured to render the video with the occluded area removed to obtain a target video.

According to a third aspect of the disclosure, there is provided an electronic device, including: a processor and a memory, where
the memory is configured to store instructions or a computer program; and
the processor is configured to execute the instructions or the computer program in the memory, to cause the electronic device to perform the method according to the first aspect.

According to a fourth aspect of the disclosure, there is provided a computer-readable storage medium having instructions stored therein. The instructions, when run on a device, causes the device to perform the method according to the first aspect.

According to a fifth aspect of the disclosure, there is provided a computer program product. The computer program product includes a computer program/instructions that, when executed by a processor, implement the method according to the first aspect.

It can be seen that the disclosure has the following beneficial effects:
according to the disclosure, in order to implement mounting of the virtual object, the original video is obtained, and a virtual object to be mounted is obtained based on the user's selection. The virtual object selected by the user is mounted to the target part of the target object in the original video. Meanwhile, the occluded area of the virtual object is removed, and the video with the occluded area removed is rendered, to obtain the target video. That is, a part, occluded by the target object, of the virtual object is removed, so that the virtual object can conform to the target part. That is, with the technical solution provided by the disclosure, when the virtual object is mounted to the target part of the target object in the original video, the occluded area of the virtual object can be removed in a timely manner, allowing the virtual object to better conform to the target part, thereby improving the mounting effect.

### BRIEF DESCRIPTION OF THE DRAWINGS

In order to more clearly describe the technical solutions in the embodiments of the disclosure or in the prior art, the drawings for describing the embodiments or the prior art will be briefly described below. Apparently, the drawings in the description below show merely some embodiments recited in the disclosure, and persons of ordinary skill in the art may still derive other drawings from these drawings without creative efforts.
FIG. 1 is a flowchart of a virtual object mounting method according to an embodiment of the disclosure;
FIG. 2 is a schematic diagram of a structure of a virtual object according to an embodiment of the disclosure;
FIG. 3a is a schematic diagram of an occlusion plane according to an embodiment of the disclosure;
FIG. 3b is a schematic diagram of another occlusion plane according to an embodiment of the disclosure;
FIG. 4a is a schematic diagram of acquisition of depth information at different positions according to an embodiment of the disclosure;
FIG. 4b is a schematic diagram of shadow rendering according to an embodiment of the disclosure;
FIG. 5 is a schematic diagram of a structure of a makeup rendering apparatus according to an embodiment of the disclosure; and
FIG. 6 is a schematic diagram of a structure of an electronic device according to an embodiment of the disclosure.

### DETAILED DESCRIPTION OF EMBODIMENTS

In order for persons skilled in the art to better understand the solutions of the disclosure, the technical solutions in the embodiments of the disclosure will be described below clearly and completely with reference to the accompanying drawings in the embodiments of the disclosure. Apparently, the embodiments described are merely some rather than all of the embodiments of the disclosure. All other embodiments obtained by persons of ordinary skill in the art based on the embodiments of the disclosure without creative efforts fall within the scope of protection of the disclosure.

Movements of existing mounting props are mainly driven by skeletal points of target parts, such as the neck, wrists, ankles, etc. However, when fewer skeletal points can be obtained, the mounting props cannot conform to the target part, leading to poor mounting effect.

Based on this, the disclosure provides a virtual object mounting method. When it is desired to mount a target part of a target object in an original video, a virtual object to be mounted is selected, and the virtual object is mounted to the target part. Meanwhile, a current occluded area of the virtual object is determined, the occluded area is removed, and the video with the occluded area removed is rendered, to obtain a target video. That is, during the process of mounting the virtual object to the target part, the occluded area of the virtual object may be determined in real time and then removed, allowing the virtual object to better conform to the target part, thereby improving the mounting effect.

It can be understood that before the use of the technical solutions in the embodiments of the disclosure, the user shall be informed of the type, range of use, use scenarios, etc., of personal information involved in an appropriate manner in accordance with the relevant laws and regulations, and the authorization of the user shall be obtained.

For example, in response to reception of an active request from a user, prompt information is sent to the user to clearly inform the user that the requested operation will require access to and use of personal information of the user. As such, the user can independently choose, based on the prompt information, whether to provide the personal information to software or hardware, such as an electronic device, an application, a server, or a storage medium, that performs the operations of the technical solutions of the disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining user authorization is only illustrative and does not constitute a limitation on the implementations of the disclosure, and other manners that satisfy the relevant laws and regulations may also be applied in the implementations of the disclosure.

To facilitate an understanding of the technical solutions provided by the embodiments of the disclosure, description is given below in conjunction with the accompanying drawings.

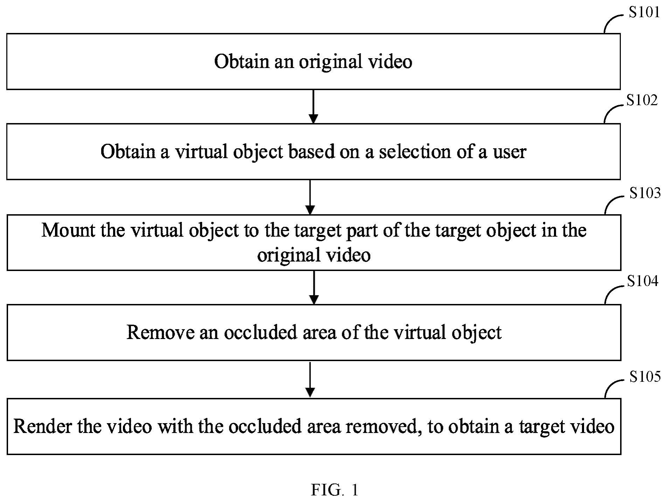

Reference is made to FIG. 1, which is a flowchart of a virtual object mounting method according to an embodiment of the disclosure. The method may be performed by a client, and the client may be installed in an electronic device. The electronic device may include a device with a communication function, for example, a mobile phone, a tablet computer, a notebook computer, a desktop computer, a vehicle-mounted terminal, a wearable electronic device, an all-in-one machine, and a smart home device, or may be a device simulated by a virtual machine or a simulator. As shown in FIG. 1, the method may include the following steps.

S101: Obtain an original video.

In this embodiment, when it is necessary to generate a video with a mounting effect, the original video is first obtained, where the original video includes a target object, and the target object includes a mounting part corresponding to the virtual object to be mounted, i.e., a target part. When the mounting part corresponding to the virtual object to be mounted is the neck, the target part is the neck; and when the mounting part corresponding to the virtual object to be mounted is the head, wrists, ankles, limbs, the target part is a head, wrists, ankles, limbs. For ease of understanding, description is made by taking the target part being a neck as an example.

The obtaining of the original video may include: a user captures a video in real time via a client's operation interface, or selects a pre-captured video.

S102: Obtain a virtual object based on a selection of the user.

In this embodiment, when the user opens the client interface, a variety of mountable virtual objects may be displayed to the user. The user can then select the virtual object to be mounted based on their own needs. For example, the virtual object may be a virtual scarf, silk scarf, wrist strap, etc.

It should be noted that the execution order of S101 and S102 is not limited in this embodiment. The user may first upload or capture the original video through the client, and then select the virtual object. Alternatively, the user may select the virtual object through the client before uploading or capturing the original video.

S103: Mount the virtual object to the target part of the target object in the original video.

After the virtual object and the original video are obtained, the virtual object is mounted to the target part of the target object in the original video.

In some embodiments, the virtual object may be mounted to the target part of the target object in the original video by obtaining the target part and a reference part of the target object in the original video; controlling motion of the virtual object based on the reference part and the target part; and mounting the virtual object to the target part based on motion information of the virtual object. That is, when the virtual object is mounted to the target part, first, motion information of the target part and motion information of the reference part of the target object are obtained, then, motion of the virtual object is controlled based on the motion information of the target part and the motion information of the reference part, and finally, the virtual object is controlled to be mounted to the target part based on the motion information of the virtual object.

That is, in order to enable the virtual object to more precisely track and conform to the target part when the target part moves, this embodiment combines the motion information of the target part with the motion information of the reference part, to control the virtual object to perform matching motion, and then mounts the virtual object to the target part based on the motion information of the virtual object, and achieve the conformal mounting of the virtual object to the target part.

For example, the virtual object is a scarf, the target part is a neck, and the reference part is a head. When the neck moves, motion information of the neck and motion information of the head are extracted, the motion information of the scarf is determined based on the motion information of the neck and the head. Then, the scarf is controlled to be mounted to the neck based on the motion information of the scarf, thereby allowing the scarf to better conform to the neck when the neck moves.

In some embodiments, the controlling motion of the virtual object based on the reference part and the target part includes: obtaining first rotation information corresponding to the reference part and second rotation information corresponding to the target part; and controlling motion of a plurality of components of the virtual object based on the first rotation information and the second rotation information to control the motion of the virtual object. The first rotation information may include a rotation angle and a rotation direction of the reference part, and the second rotation information may include a rotation angle and a rotation direction of the target part. The first rotation information may indicate rotation information of the reference part as a whole, or may indicate rotation information of a key point or a position on the reference part. For example, the reference part is a head, and the first rotation information may be rotation information corresponding to a position of a nose. The second rotation information may indicate rotation information of the target part as a whole, or may indicate rotation information corresponding to a key point or a position on the target part. For example, the target part is a neck, and the second rotation information may be rotation information corresponding to a position of a throat.

The first rotation information and the second rotation information may both be quaternions, and may each include a rotation axis and a rotation angle. For example, the rotation information may be expressed as (x, y, z, w), where (x, y, z) represents the rotation axis, and w represents the rotation angle.

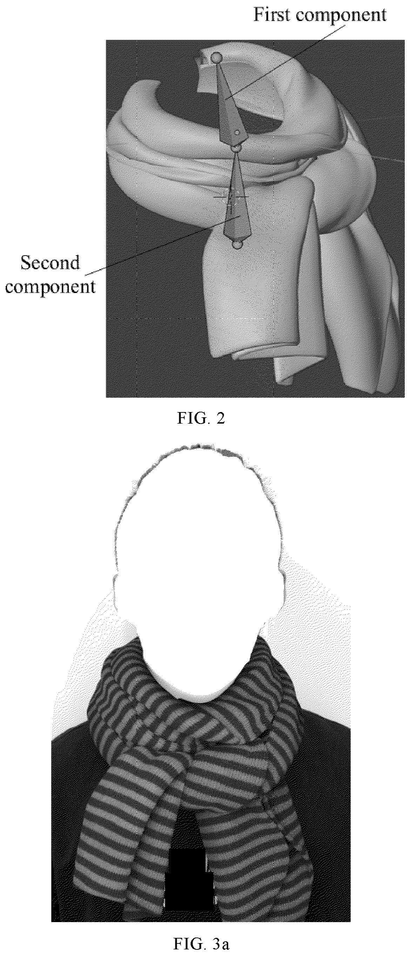

In order to control the virtual object to move following the motion of the target part, the virtual object may be divided into a plurality of components to control the motion of different components separately. Specifically, motion of a first component is controlled based on the first rotation information; and motion of a second component is controlled based on the second rotation information. For example, a scarf model shown in FIG. 2 has a composition similar to that of neck bones, and bones of the scarf model include a first component and a second component. The first component and the second component represent an upper area and a lower area of the neck, respectively. The motion of the first component is controlled by a first rotation parameter corresponding to the head, and the motion of the second component is controlled by a second rotation parameter corresponding to the neck.

In this embodiment, when the second component is mounted, a mounting position is the target part, so that rotation of the target part can be controlled directly by the second rotation parameter corresponding to the target part. However, the first component does not exactly match the reference part. For example, a mounting part corresponding to the first component in FIG. 2 is located below the head, and should be in an intermediate state between the reference part and the target part due to the presence of a difference in rotation between the mounting part and the reference part. In order to control the rotation of the first component more accurately, the first rotation information may be corrected first when the motion of the first component is controlled by using the first rotation information, to control the rotation of the first component by using the corrected rotation information.

Where, the correction process may specifically include: performing reduction processing or enlargement processing on the first rotation angle in the first rotation information to obtain a third rotation angle; and controlling the rotation of the first component based on a second rotation angle and the third rotation angle. The second rotation angle is the rotation angle included in the second rotation information. As to whether to perform reduction processing or enlargement processing the first rotation angle, it is usually determined based on a position between the mounting part and the reference part corresponding to the first component. Reduction processing is performed on the first rotation angle when the mounting part corresponding to the first component is located below the reference part; and enlargement processing is performed on the first rotation angle when the mounting part corresponding to the first component is located above the reference part.

Where, the controlling the rotation of the first component based on a second rotation angle and the third rotation angle includes: multiplying the second rotation angle by the third rotation angle to obtain a fourth rotation angle; and controlling the rotation of the first component based on the rotation axis and the fourth rotation angle. That is, first, the first component is controlled to rotate by the second rotation angle, and then, the first component is controlled to rotate by the fourth rotation angle, so that the first component tends to rotate toward the reference part on the basis of the second component.

In some embodiments, in order to more accurately control the motion of the virtual object, the virtual object may be divided into more components to control the motion of the different components separately. Specifically, a third component may be obtained based on the first component and the second component, and motion of the third component may be controlled based on the first rotation information and the second rotation information. For example, a third component may be obtained by division between the first component and the second component, and weight information corresponding to the third component is determined based on a distance between a center point of the third component and a center point of the first component, and a distance between the center point of the third component and a center point of the second component, and then third rotation information corresponding to controlling motion of the third component is determined by using the first rotation information, the second rotation information, and the weight information.

For example, a weight of the third component relative to the first component is a, a weight of the third component relative to the second component is (1-a), then the third rotation information = a * first rotation information + (1-a) * second rotation information, and then the motion of the third component is controlled based on the third rotation information.

S104: Remove an occluded area of the virtual object.

In this embodiment, after the virtual object is mounted to the target part, the target part or the reference part may occlude part of an area of the virtual object. In order to provide a better mounting effect, it is necessary to remove the occluded area on the virtual object.

Specifically, the occluded area of the virtual object may be removed by: obtaining depth information of the virtual object; setting an occlusion plane based on the depth information of the virtual object, where a shape of the occlusion plane is obtained by detecting the target object; and removing the occluded area of the virtual object based on the occlusion plane. That is, depth information of the occlusion plane is determined by obtaining the depth information of the virtual object, and the occluded area of the virtual object is removed by using the occlusion plane. A specific shape of the occlusion plane depends on the target object. For example, when the virtual object is a scarf, the occlusion plane may be cropped based on the head and neck of the target object, so that the occlusion plane can perform occlusion more precisely. For example, as shown in FIG. 3a, the occluded area of the virtual object is removed by using the occlusion plane, and the shape of the occlusion plane is obtained by cropping based on the user's head and neck in the original video.

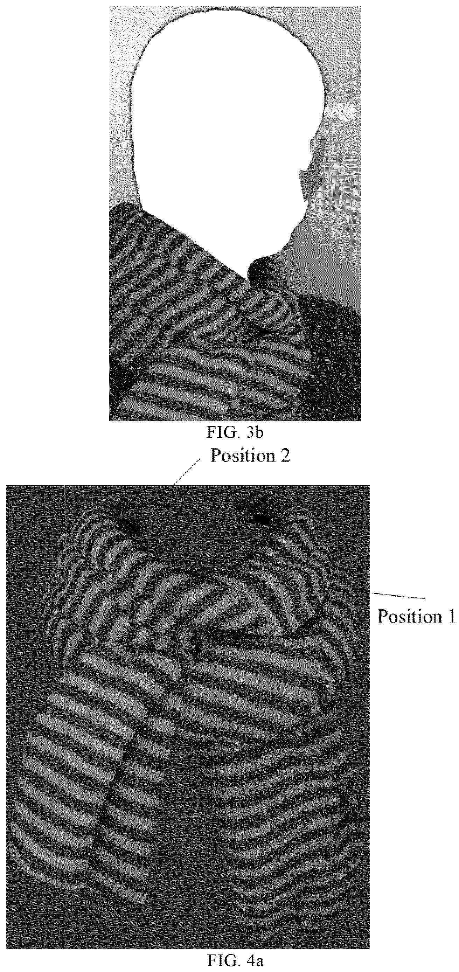

In some application scenarios, the target part may move, and the virtual object may also move accordingly, which may result in change in the occluded area corresponding to the virtual object. In order to enable the occluded area of the virtual object to be accurately removed, after the virtual object moves, the occlusion plane is reset based on the depth information of the virtual object after the motion. For example, as shown in FIG. 3b, when the user's neck rotates to the left, the occlusion plane may be reset to remove the occluded area in the virtual object.

Specifically, the setting an occlusion plane based on the depth information of the virtual object includes: obtaining first depth information and second depth information based on the depth information of the virtual object; and determining the depth information of the occlusion plane based on the first depth information and the second depth information. The first depth information and the second depth information respectively represent depth information at different positions in the virtual object, and the depth information of the occlusion plane is determined based on the depth information at the two different positions. For example, as shown in FIG. 4a, the first depth information is depth information at position 1 in the virtual object, and the second depth information is depth information at position 2 in the virtual object. Specifically, an average value of the first depth information and the second depth information is used as the depth information of the occlusion plane, or a weighted value of the first depth information and the second depth information is used as the depth information of the occlusion plane based on a pre-assigned weight.

S105: Render the video with the occluded area removed, to obtain a target video.

After the occluded area of the virtual object is removed, the video is rendered to obtain the target video, and the virtual object in the target video is accurately conform to the target part.

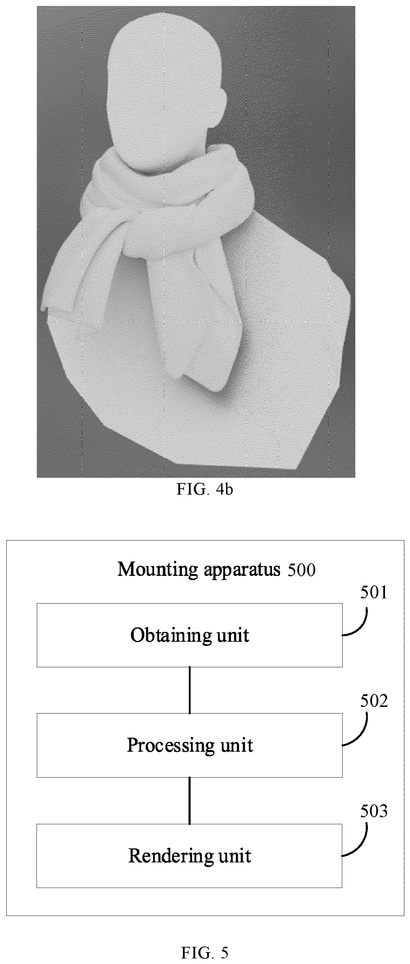

The rendering the video includes rendering, in the video, shadows generated after the virtual object is mounted to the target part. Specifically, corresponding ambient light occlusion information after the virtual object is mounted to the target part is obtained; and the video with the occluded area removed is rendered by using the ambient light occlusion information, to obtain the target video. The ambient light occlusion information includes ambient light occlusion information at a position where the virtual object is in contact with the target part, and ambient light occlusion information at a position where the virtual object is in contact with other parts (e.g., the reference part). For example, as shown in FIG. 4b, shadows are rendered in an occlusion position between the scarf and a human body, so that there is a better transition of light at the junction of the human body and the scarf.

It can be seen that in order to implement mounting of the virtual object, the original video is obtained, and the virtual object to be mounted is obtained based on the user's selection. The virtual object selected by the user is mounted to the target part of the target object in the original video. Meanwhile, the occluded area of the virtual object is removed, and the video with the occluded area removed is rendered, to obtain the target video. That is, a part, occluded by the target object, of the virtual object is removed, so that the virtual object can conform to the target part. That is, with the technical solution provided by the disclosure, when the virtual object is mounted to the target part of the target object in the original video, the occluded area of the virtual object can be removed in a timely manner, allowing the virtual object to better conform to the target part, thereby improving the mounting effect.

Based on the above method embodiment, the embodiments of the disclosure provide a virtual object mounting apparatus and an electronic device, which will be described below in conjunction with the accompanying drawings.

Reference is made to FIG. 5, which is a schematic diagram of a structure of a virtual object mounting apparatus according to an embodiment of the disclosure. As shown in FIG. 5, the apparatus includes: an obtaining unit 501, a processing unit 502, and a rendering unit 503.

The obtaining unit 501 is configured to obtain an original video;
the obtaining unit 501 is further configured to obtain a virtual object based on a selection of a user;
the processing unit 502 is configured to mount the virtual object to a target part of a target object in the original video;
the processing unit 502 is further configured to eliminate an occluded area of the virtual object; and
the rendering unit 503 is configured to render the video with the occluded area removed, to obtain the target video.

In some embodiments, the processing unit 502 is specifically configured to obtain the target part and a reference part of the target object in the original video; control motion of the virtual object based on the reference part and the target part; and mount the virtual object to the target part based on motion information of the virtual object.

In some embodiments, the processing unit 502 is specifically configured to obtain first rotation information corresponding to the reference part; obtain second rotation information corresponding to the target part; and control motion of a plurality of components of the virtual object based on the first rotation information and the second rotation information, to control motion of the virtual object.

In some embodiments, the processing unit 502 is specifically configured to control motion of a first component based on the first rotation information; control motion of a second component based on the second rotation information; obtain a third component based on the first component and the second component; and control motion of the third component based on the first rotation information and the second rotation information.

In some embodiments, the processing unit 502 is specifically configured to obtain depth information of the virtual object; set an occlusion plane based on the depth information of the virtual object, where a shape of the occlusion plane is obtained by detecting the target object; and remove the occluded area of the virtual object based on the occlusion plane.

In some embodiments, the processing unit 502 is specifically configured to obtain first depth information and second depth information based on the depth information of the virtual object; and determine depth information of the occlusion plane based on the first depth information and the second depth information.

In some embodiments, the rendering unit 503 is specifically configured to obtain corresponding ambient light occlusion information after the virtual object is mounted to the target part; and render the video with the occluded area removed by using the ambient light occlusion information, to obtain the target video.

In some embodiments, the ambient light occlusion information includes ambient light occlusion information at a position where the virtual object is in contact with the target part, and ambient light occlusion information at a position where the virtual object is in contact with other parts.

It should be noted that, for specific implementation of the various units in this embodiment, reference may be made to the related description in the above method embodiment. The division of units in the embodiments of the disclosure is illustrative and is merely logical function division, and there may be other division methods in actual implementation. The various functional units in the embodiments of the disclosure may be integrated into one processing unit, or the various units may be physically present separately, or two or more units may be integrated into one unit. For example, in the above embodiment, a processing unit and a sending unit may be the same unit or different units. The integrated unit may be implemented in the form of hardware, or may be implemented in the form of a software function unit.

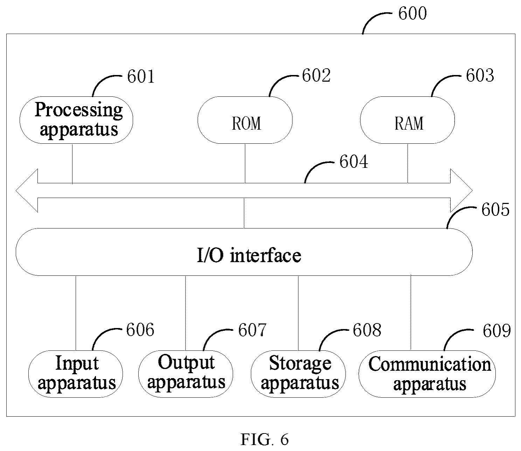

Reference is made to FIG. 6, which is a schematic diagram of a structure of an electronic device 600 suitable for implementing an embodiment of the disclosure. A terminal device in this embodiment of the disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 6 is merely an example, and shall not impose any limitation on the function and scope of use of the embodiments of the disclosure.

As shown in FIG. 6, the electronic device 600 may include a processing apparatus (e.g., a central processing unit or a graphics processing unit) 601 that may perform a variety of appropriate actions and processing in accordance with a program stored in a read-only memory (ROM) 602 or a program loaded from a storage apparatus 608 into a random access memory (RAM) 603. The RAM 603 further stores various programs and data required for operations of the electronic device 600. The processing apparatus 601, the ROM 602, and the RAM 603 are connected to one another through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a tape and a hard disk; and a communication apparatus 609. The communication apparatus 609 may allow the electronic device 600 to perform wireless or wired communication with other devices to exchange data. Although FIG. 6 shows the electronic device 600 having various apparatuses, it should be understood that it is not required to implement or have all of the shown apparatuses. It may be an alternative to implement or have more or fewer apparatuses.

In particular, according to an embodiment of the disclosure, the process described above with reference to the flowchart may be implemented as a computer software program. For example, this embodiment of the disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 609, installed from the storage apparatus 608, or installed from the ROM 602. When the computer program is executed by the processing apparatus 601, the above-mentioned functions defined in the method of the embodiment of the disclosure are performed.

The electronic device according to this embodiment of the disclosure and the method according to the above embodiments belong to the same inventive concept. For the technical details not exhaustively described in this embodiment, reference may be made to the above embodiments, and this embodiment and the above embodiments have the same beneficial effects.

An embodiment of the disclosure provides a computer storage medium storing a computer program thereon, where the program, when executed by a processor, implements the method according to the above embodiments.

It should be noted that the above computer-readable medium described in the disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the disclosure, the computer-readable storage medium may be any tangible medium containing or storing a program which may be used by or in combination with an instruction execution system, apparatus, or device. In the disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client or a server may perform communication by using any currently known or future-developed network protocol such as a hypertext transfer protocol (HTTP), and may interconnect with digital data communication (e.g., a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, enable the electronic device to perform the above method.

Computer program code for performing operations of the disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a first user, partially executed on a computer of a first user, executed as an independent software package, partially executed on a computer of a first user and partially executed on a remote computer, or completely executed on a remote computer or server. In the case of the remote computer, the remote computer may be connected to the computer of the first user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the disclosure may be implemented by software, or may be implemented by hardware. The name of the unit/module does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the various embodiments in this specification are described in a progressive manner, and each embodiment focuses on the differences from other embodiments. The same or similar parts between the various embodiments may be referenced to each other. For the system or apparatus disclosed in this embodiment, since it corresponds to the method disclosed in the embodiments, the description is relatively simple, and for the related parts, reference may be made to the description of the method.

It should be understood that, in the disclosure, "at least one" means one or more, and "a plurality of" means two or more. The term "and/or" is used to describe an association relationship between associated objects, and indicates that three relationships may exist, for example, A and/or B may indicate that: only A exists, only B exists, and both A and B exist, where A or B may be singular or plural. The character "/" generally indicates an "or" relationship between the associated objects. "At least one of the following" or similar expressions refers to any combination of these items, including any combination of single items or plural items. For example, at least one of a, b, or c may indicate: a, b, and c, "a and b", "a and c", "b and c", or "a and b and c", where a, b, or c may be singular or plural.

It should also be noted that, herein, relative terms such as "first" and "second" are only used to distinguish one entity or operation from another entity or operation, and do not necessarily require or imply that such an actual relationship or order exists between these entities or operations. Moreover, the terms "include" and "include", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including a ..." does not exclude another identical element in a process, method, article, or device that includes the element.

The steps of the method or algorithm described in conjunction with the embodiments disclosed herein may be implemented directly in hardware, in a software module executed by a processor, or in a combination of the two. The software module may be disposed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

With respect to the above description of the disclosed embodiments, those skilled in the art could implement or use the disclosure. Various modifications to these embodiments are apparent to those skilled in the art, and the general principle defined herein may be practiced in other embodiments without departing from the spirit or scope of the disclosure. Therefore, the disclosure is not limited to the embodiments described herein but is to be accorded with the broadest scope consistent with the principle and novel features disclosed herein.

## Claims

1. A method for mounting a virtual object, comprising:
obtaining an original video;
obtaining a virtual object based on a selection of a user;
mounting the virtual object to a target part of a target object in the original video;
removing an occluded area of the virtual object; and
rendering the video with the occluded area removed to obtain a target video.

2. The method according to claim 1, wherein mounting the virtual object to the target part of the target object in the original video comprises:
obtaining the target part and a reference part of the target object in the original video;
controlling, based on the reference part and the target part, motion of the virtual object; and
mounting, based on motion information of the virtual object, the virtual object to the target part.

3. The method according to claim 2, wherein controlling motion of the virtual object based on the reference part and the target part comprises:
obtaining first rotation information corresponding to the reference part;
obtaining second rotation information corresponding to the target part; and
controlling, based on the first rotation information and the second rotation information, motion of a plurality of components of the virtual object to control the motion of the virtual object.

4. The method according to claim 3, wherein controlling, based on the first rotation information and the second rotation information, motion of the plurality of components of the virtual object comprises:
controlling motion of a first component based on the first rotation information;
controlling motion of a second component based on the second rotation information;
obtaining a third component based on the first component and the second component; and
controlling motion of the third component based on the first rotation information and the second rotation information.

5. The method according to claim 1, wherein removing the occluded area of the virtual object comprises:
obtaining depth information of the virtual object;
setting an occlusion plane based on the depth information of the virtual object, wherein a shape of the occlusion plane is obtained by detecting the target object; and
removing the occluded area of the virtual object based on the occlusion plane.

6. The method according to claim 5, wherein the setting the occlusion plane based on the depth information of the virtual object comprises:
obtaining first depth information and second depth information based on the depth information of the virtual object; and
determining depth information of the occlusion plane based on the first depth information and the second depth information.

7. The method according to claim 1, wherein rendering the video with the occluded area removed to obtain a target video comprises:
obtaining corresponding ambient light occlusion information after the virtual object being mounted to the target part; and
rendering the video with the occluded area removed with the ambient light occlusion information, to obtain the target video.

8. The method according to claim 7, wherein the ambient light occlusion information comprises ambient light occlusion information at a position where the virtual object is in contact with the target part, and ambient light occlusion information at a position where the virtual object is in contact with other parts.

9. A apparatus for mounting a virtual object, comprising:
an obtaining unit configured to obtain an original video, the obtaining unit being further configured to obtain a virtual object based on a selection of a user;
a processing unit configured to mount the virtual object to a target part of a target object in the original video,
the processing unit being further configured to remove an occluded area of the virtual object; and
a rendering unit configured to render the video with the occluded area removed to obtain the target video.

10. An electronic device, comprising:
a processor and a memory,
the memory being configured to store instructions or a computer program, and
the processor being configured to execute the instructions or computer program stored in the memory to cause the electronic device to perform any of claims 1 to 8.

11. A computer-readable storage medium having instructions stored therein, wherein the instructions, when executed on a device, cause the device to perform any of claims 1 to 8.
